# EUROPEAN PATENT APPLICATION

(11) **EP 3 761 610 A1**
(43) Date of publication of application: **06.01.2021**
(21) Application number: 20183619.4
(22) Date of filing: 02.07.2020
(51) Int. Cl.: H04L 29/08, H04W 4/02, H02J 50/00, H04W 12/00

(54) **METHOD AND SENSOR FOR ACTIVATING FUNCTIONALITY**

(30) Priority: 03.07.2019 US 201962870320 P; 11.07.2019 GB 201909969; 30.10.2019 GB 201915713
(71) Applicant: Chargifi Ltd., London EC4Y 8EH (GB)
(72) Inventor: BLADEN, Dan, London, EC4Y 8EH (GB); BRADLEY, Ciaran, London, EC4Y 8EH (GB); BREWER, Dennis Michael, London, EC4Y 8EH (GB); DE LAUNE, Jordan, London, EC4Y 8EH (GB); VAN DEVENTER, Jonathan Nicholas, London, EC4Y 8EH (GB)
(74) Representative: Appleyard Lees IP LLP

(57) **Abstract**

Broadly speaking, embodiments of the present techniques provide methods for activating functionality on a client device when the client device is determined by a sensor to be in a particular environment. Advantageously, the client device and sensor(s) do not communicate directly so there is no requirement for a trust relationship to be established therebetween, which may consume power, take time and may require user involvement. The functionality on the client device may instead be activated by a trusted server, and the trust relationship may be established when a user of the client device registers to use the system.

## Description

The present techniques generally relate to systems, apparatus and methods for activating functionality, and in particular relate to methods for detecting a first device and activating functionality on at least the first device or at least on a second device.

In a first approach of the present techniques, there is provided a method for activating functionality on a client device, the method performed by a server comprising: receiving, from a sensor, a notification that the client device has been detected by the sensor; initiating a communication session with the client device; and transmitting, to the client device, instructions to activate a function on the client device.

The method may further comprise: determining, after receiving the notification from the sensor, a zone of a plurality of zones in which the sensor is located; retrieving a set of unique identifiers associated with the determined zone; transmitting a unique identifier from the set of unique identifiers to the sensor for broadcasting; and receiving an activation response message comprising at least the unique identifier broadcast by the sensor.

The method may further comprise: generating an activation request comprising: data identifying the sensor from which the notification was received, data indicating a time and date when the notification was received from the sensor, and the unique identifier that was transmitted to the sensor; and storing the activation request. The method may further comprise: determining whether the activation response message matches a stored activation request; and initiating a communication session with the client device if the activation response message matches the stored activation request.

The step of transmitting instructions to activate a function on the client device may comprise: transmitting instructions to activate application software on the client device.

The method may further comprise: identifying an environment in which the sensor is located. In this case, transmitting instructions to activate a function on the client device may comprise: transmitting instructions to activate application software associated with the identified environment on the client device. Alternatively, transmitting instructions to activate a function on the client device may comprise: transmitting instructions to prompt a user of the client device to download and install application software associated with the identified environment.

The step of transmitting instructions to activate a function on the client device may comprise: transmitting instructions to prompt a user of the client device to activate Bluetooth functionality on the client device.

The sensor may be a wireless charging device, and the method may further comprise: transmitting instructions to the sensor to permit the client device to receive wireless provision of power.

The instructions to the sensor to permit the client device to receive wireless provision of power may specify any one of: unlimited provision of power, provision of power for a predetermined time period, provision of power at a specific wattage, and provision of power until the client device has been charged to a predetermined level.

The step of determining a zone of a plurality of zones in which the sensor is located may comprise: extracting, from the received notification, a sensor identifier which uniquely identifies the sensor; and retrieving, from a database of sensors and associated zones and environments, the location of the sensor using the extracted sensor identifier.

Each zone of the plurality of zones may comprise at least two sensors that are each continuously broadcasting an identifier.

When each zone of the plurality of zones comprises at least two sensors that each continuously broadcasting an identifier, the message received from the client device may comprise signal strength information indicating the strength of a signal received from each sensor. In this case, the method may further comprise: determining, using the received signal strength information, which sensor is closest to the client device. The method may further comprise: determining, using further information, which sensor is closest to the client device. The further information may comprises one or more of: a time of day, a room booking, a reservation, a meeting entry in a calendar of a user of the client device. The method may further comprise: associating the client device with the sensor determined to be closest to the client device.

When the method comprises identifying an environment in which the sensor is located, the method may further comprise: identifying a third party associated with the identified environment in which the sensor is located; and transmitting, to the identified third party, a message indicating that the client device is located in an environment associated with the third party.

The method may further comprise: performing, with the sensor, a security handshake; and if the security handshake is successful, transmitting, to the client device, a message indicating that the sensor has been authenticated.

The activation response message received from the client device may further comprises one or more of: a device model, a device type, and a value indicating a remaining power of a battery of the client device. When the instructions to the sensor permit the client device to receive wireless provision of power, the method may further comprise: receiving, from the sensor, a measure of power drawn by the client device; determining, using the received power, if the client device is a low-power consumption device; and permitting the client device to receive wireless provision of power for an unlimited time. Alternatively, the method may further comprise: determining, if a device model or device type in the received message from the client device matches a device model or device type on a list of low-power consumption devices; and permitting the client device to receive wireless provision of power for an unlimited time. If the device model or device type in the received message does not match a device model or device type on a list of low-power consumption devices, the instructions to the sensor to permit the client device to receive wireless provision of power comprise restricting a duration in which the client device receives wireless provision of power.

The method may further comprise: receiving, from the sensor, a notification that the client device cannot be detected by the sensor; and terminating the communication session with the client device. In this case, the method further comprises: disassociating the client device from the associated sensor.

In a second approach of the present techniques, there is provided a server for activating functionality on a client device and carrying out any of the methods described herein (such as, but not limited to, the methods described above with respect to the first approach). The server comprises: a processor coupled to memory and a communication module, to: receive a notification that the client device has been detected by a sensor; initiate a communication session with the client device; and transmit, to the client device, instructions to activate a function on the client device.

The communication module of the server may communicate with one or more sensors via any one or more of: wireless communication, hypertext transfer protocol (HTTP), message queuing telemetry transport (MQTT), a wireless mobile telecommunication protocol, radio frequency communication (RFID), near field communication (NFC), ZigBee, Thread, Bluetooth, Bluetooth LE, IPv6 over Low Power Wireless Standard (6LoWPAN), Constrained Application Protocol (CoAP), wired communication.

The communication module of the server may communicate with the client device via any one or more of: wired communication, wireless communication, a wireless mobile telecommunication protocol, hypertext transfer protocol (HTTP), message queuing telemetry transport (MQTT), ZigBee, Thread, Bluetooth, Bluetooth LE, IPv6 over Low Power Wireless Standard (6LoWPAN), or Constrained Application Protocol (CoAP).

In a third approach of the present techniques, there is provided a method for activating functionality on a client device, the method performed by a sensor comprising: detecting a client device in the vicinity of the sensor; transmitting, to a server, a notification that the client device has been detected by the sensor; receiving, from the server, a unique identifier from a set of unique identifiers for broadcasting; and broadcasting the received unique identifier instead of broadcasting a default sensor identifier.

In cases where the sensor is a wireless charging device, the method may further comprise: receiving, from the server, instructions to permit the sensor to enable wireless provision of power to the client device.

The method may further comprise: broadcasting, after a predetermined time, the default sensor identifier instead of the received unique identifier.

The method may further comprise: transmitting, to the server, a notification that the client device can no longer be detected by the sensor.

The method may further comprise: controlling an indicator to indicate when a client device has been detected in the vicinity of the sensor.

The method may further comprise: controlling an indicator to indicate when no client device has been detected in the vicinity of the sensor.

In a fourth approach of the present techniques, there is provided a sensor for activating functionality on a client device and carrying out any of the methods described herein (such as, but not limited to, the methods described above with respect to the third approach). The sensor comprises: a processor coupled to memory and a communication module, to: detect a client device in the vicinity of the sensor; transmit, to a server, a notification that the client device has been detected by the sensor; receive, from the server, a unique identifier from a set of unique identifiers for broadcasting; and broadcast the received unique identifier instead of broadcasting a default sensor identifier. The communication module may be part of the sensor or may be external to the sensor.

The communication module of the sensor may communicate with the server via any one or more of: wireless communication, hypertext transfer protocol (HTTP), message queuing telemetry transport (MQTT), a wireless mobile telecommunication protocol, ZigBee, Thread, Bluetooth, Bluetooth LE, IPv6 over Low Power Wireless Standard (6LoWPAN), Long Range Wide Area Network (LoRaWAN), Low-power Wide-area network (LPWAN), Sigfox, Constrained Application Protocol (CoAP), and wired communication.

The communication module of the sensor may communicate with the client device via any one or more of: wireless communication, hypertext transfer protocol (HTTP), message queuing telemetry transport (MQTT), a wireless mobile telecommunication protocol, radio frequency communication (RFID), near field communication (NFC), ZigBee, Thread, Bluetooth, Bluetooth LE, IPv6 over Low Power Wireless Standard (6LoWPAN), Constrained Application Protocol (CoAP), wired communication.

The sensor may be any one of: a wireless charging device, a temperature sensor, an infra-red sensor, a humidity sensor, a gas sensor (e.g. a CO₂ sensor), a pollution sensor, a pressure sensor, a light sensor, a magnetic field sensor, an environmental sensor, and a motion sensor.

The sensor may comprise an indicator for indicating when a client device has been detected in the vicinity of the sensor. The processor of the sensor may: transmit a control signal to an indicator communicatively coupled to the sensor, the control signal instructing the indicator to indicate that a client device has been detected. The indicator may be any one of: a visual indicator, a light, a plurality of lights, a display, an audio indicator, and a haptics indicator.

In the present techniques the sensor may be a wireless charging device, a temperature sensor, an infra-red sensor or a motion sensor, for example. When the sensor is a wireless charging device, the sensor may be able to receive, from the server, instructions to permit the sensor to enable wireless provision of power to the client device.

The sensor may broadcast, after a predetermined time, the default sensor identifier instead of the received unique identifier.

The sensor may transmit, to the server, a notification that the client device can no longer be detected by the sensor.

In a fifth approach of the present techniques, there is provided a method for activating functionality on a client device, the method performed by a client device comprising: receiving, from at least one sensor in the vicinity of the client device, a sensor identifier and a rest identifier in a broadcast message; receiving, from the at least one sensor, the sensor identifier and a unique identifier in a further broadcast message; transmitting, responsive to receiving the unique identifier, a message comprising at least the sensor identifier and the unique identifier broadcast by the at least one sensor; and receiving, from a server, instructions to activate a function.

The step of receiving instructions to activate a function may comprise: receiving instructions to activate application software.

The step of receiving instructions to activate a function may comprise: receiving instructions to prompt a user of the client device to download and install application software.

The step of receiving instructions to activate a function may comprise: receiving instructions to prompt a user of the client device to activate Bluetooth functionality on the client device.

The step of transmitting a message may comprise at least the sensor identifier and the unique identifier comprises: transmitting a message comprising the sensor identifier and the unique identifier broadcast by the at least one sensor and signal strength information indicating the strength of the broadcast received from the at least one sensor.

In a sixth approach of the present techniques, there is provided a client device for carrying out any of the methods described here. The client device comprises: a processor coupled to memory and a communication module, to: receive, from at least one sensor in the vicinity of the client device, a sensor identifier and a rest identifier in a broadcast message; receive, from the at least one sensor, a sensor identifier and a unique identifier in a further broadcast message; transmit, responsive to receiving the unique identifier, a message comprising at least the sensor identifier and the unique identifier broadcast by the at least one sensor; and receive, from a server, instructions to activate a function.

The client device may be any one of: a smartphone, a mobile computing device, a laptop, a mobile or portable electronic device, an electric vehicle, an electronic device comprising a battery operable to be charged via a wired connection, and an electronic device comprising a battery operable to be charged wirelessly.

As explained in more detail below, any change in the broadcast message of a sensor in the vicinity of the client device may trigger the client device to contact the server, which begins the process to activate functionality on either the client device, another device or server in the system, or multiple devices and servers in the system. One way to cause the client device to 'wake up' when it is in the vicinity of a sensor is for the sensor to change what message the sensor is broadcasting. For example, by default, the sensor might broadcast a message which only contains a sensor ID and, when required to, might temporarily switch to broadcasting a message containing a sensor ID and a unique ID (provided by the server). Alternatively, the sensor might broadcast a message which contains a sensor ID and a rest ID and, when required to, might temporarily switch to broadcasting a message containing a sensor ID and a unique ID. In either case, it is the temporary change in the broadcast message which causes the client device to take action and for the subsequent process to be triggered. Accordingly, it will be understood that the examples of broadcast messages described herein are non-limiting illustrative examples, and the broadcast messages may have any content or take any form, as long as when the client device has been detected by a sensor, the sensor temporarily changes its broadcast message content to trigger the client device to take action.

In the present techniques, the client device may be any one of: a smartphone, a mobile computing device, a laptop, a mobile or portable electronic device, an electric vehicle (e.g. an electric car, bike or scooter), a drone, a robot or robotic device, and an electronic device comprising a battery operable to be charged wirelessly. The client device may be any type of electronic device. The client device may be a device which comprises a battery that can be charged wirelessly or via a wired connection.

The client device may receive instructions to activate application software. The client device may receive instructions to prompt a user of the client device to download and install application software. The client device may receive instructions to prompt a user of the client device to activate Bluetooth functionality on the client device.

The message transmitted by the client device may comprise the unique identifier broadcast by the at least one sensor and signal strength information indicating the strength of the broadcast received from the at least one sensor.

In a seventh approach of the present techniques, there is provided a non-transitory data carrier carrying processor control code to implement any of the methods, processes and techniques described herein.

In an eighth approach of the present techniques, there is provided a system for activating functionality on a client device, the system comprising: a client device having at least one function that is activatable when the client device is in a particular environment; a sensor to detect a client device in the vicinity of the sensor; and a server to: receive, from the sensor, a notification that the client device has been detected by the sensor; initiate a communication session with the client device; and transmit, to the client device, instructions to activate the at least one function on the client device.

In a ninth approach of the present techniques, there is provided a method for detecting a first device and activating functionality on a second device, the method performed by a server comprising: receiving, from a sensor, a notification that a first device has been detected by the sensor; initiating a communication session with the second device; and transmitting, to the second device, instructions to activate a function on the second device.

In a tenth approach of the present techniques, there is provided a system for detecting a first device and activating functionality on a second device, the system comprising: a first device; a second device; a sensor to detect when the first device is in the vicinity of the sensor; and a server to: receive, from the sensor, a notification that the first device has been detected by the sensor; initiate a communication session with the second device; and transmit, to the second device, instructions to activate at least one function on the second device.

In the ninth and tenth approaches of the present techniques, the first device may be detected by a sensor and used to activate functionality on, or using, a second device. Thus, in some cases, once the first device has been sensed and authenticated or authorised by the system, functionality on a second device may be activated. The first device may be a client device (e.g. a user device), and the second device may be a server, a third party server, a further device in the system or a further user device. The functionality may be activated directly on the second device, or the second device may be caused to initiate or provide a service via the second device. Thus, the instructions transmitted by the server to the second device may be instructions to activate a service on, or using or via, the second device. For example, the second device may be a server instructed to book a meeting room, or may be a light-emitting device instructed to turn on.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise sub-components which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be implemented using multiple processors or control circuits. The present techniques may be adapted to run on, or integrated into, the operating system of an apparatus.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

Implementations of the present techniques will now be described, by way of example only, with reference to the accompanying drawings, in which:
Figure 1 shows a schematic diagram of a system for activating functionality on a client device;
Figure 2 shows a flowchart of example steps performed by a server for activating functionality on a client device;
Figure 3 shows example steps to activate functionality on a client device;
Figure 4 shows a flowchart of example steps to initiate a communication session with a client device; and
Figures 5A to 5C illustrate example techniques for indicating that functionality on a client device is activated.

Broadly speaking, embodiments of the present techniques provide methods for activating functionality on a client device when the client device is determined by a sensor to be in a particular environment. For example, when a client device (such as a mobile phone/smartphone) is detected in a particular environment (such as a hotel), the methods may cause a software application ('app') associated with that environment to be launched on the client device. In this example, the app may be an app provided by the hotel, and the app may be launched to enable a user of the client device to check-in to the hotel. In another example, when a client device is detected in an environment which contains wireless chargers which are operable to wirelessly charge the battery of electronic devices, the methods may permit the client device to be wirelessly charged when placed on a charger. Advantageously, the client device and sensor(s) do not communicate directly so there is no requirement for a trust relationship to be established therebetween, which may consume power, take time and may require user involvement. The functionality on the client device may instead be activated by a trusted server, and the trust relationship may be established when a user of the client device registers to use the system.

The term "message" is used herein to mean any type of radio or electronic communication sent between elements of a system or communication network, and is used interchangeably herein with the terms "notification", "advertisement", "data" and "data packet".

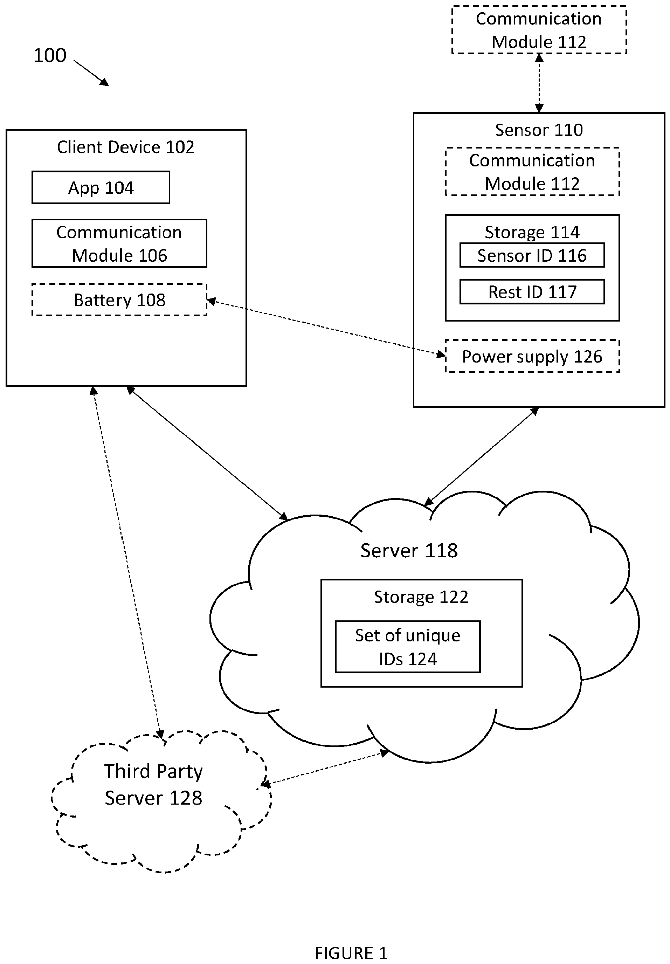

Figure 1 shows a schematic diagram of a system 100 for activating functionality on a client device 102. The system 100 comprises at least one client device 102, at least one sensor 110, and a server 118.

The client device 102 may be any type of electronic device, such as, for example, a smartphone, a mobile computing device, a laptop, a mobile or portable electronic device, an electric vehicle (e.g. an electric car, bike or scooter), a drone, a robot or robotic device, and an electronic device comprising a battery operable to be charged wirelessly. The client device may be any type of electronic device. In some cases, the client device may be a device which comprises a battery that can be charged wirelessly or via a wired connection. The client device 102 may comprise at least one software application ('app') 104. For example, one app 104 on the client device 102 may be an app that provides the client device 102 with access to the services provided by the server 118 and system 100. The at least one software app 104 may comprise an app provided by Chargifi, and/or may comprise an app provided by a third party (such as a hotel, airline, a provider of shared workspaces, a shop, etc.) who uses the services provided by the server and system.

The client device 102 may comprise a communication module 106 to enable the client device 102 to detect transmissions/broadcasts made by the sensor(s) 110 and to communicate with the server 118. In cases where the system comprises a third party server 128 (i.e. a server owned by a third party who uses the services), the communication module 106 may be able to communicate with the third party server 128. The communication module 106 may be any communication module suitable for sending and receiving messages, or may be a communication module configured to (or adapted to) send and receive messages. The communication module 106 may be able to communicate (i.e. send messages to and/or receive messages from) with the server 118, third party server 128 and the sensor 110 using any one or more of: wireless communication (e.g. WiFi), hypertext transfer protocol (HTTP), message queuing telemetry transport (MQTT), a wireless mobile telecommunication protocol, short range communication such as radio frequency communication (RFID) or near field communication (NFC), or by using the communication protocols specified by ZigBee, Thread, Bluetooth, Bluetooth LE, IPv6 over Low Power Wireless Standard (6LoWPAN), Long Range Wide Area Network (LoRaWAN), Low-power Wide-area network (LPWAN), Sigfox, Constrained Application Protocol (CoAP), or wired communication. The communication module 106 may use a wireless mobile (cellular) telecommunication protocol to communicate with remote machines, e.g. 3G, 4G, 5G, etc. The communication module 106 may communicate with the sensor(s) 110 using wire communication techniques, such as via metal cables or fibre optic cables. The client device 102 may use more than one communication technique to communicate with other components in the system 100. It will be understood that this is a non-exhaustive list of communication techniques that the communication module 106 may use. It will also be understood that intermediary devices (such as a gateway) may be located between the client device 102 and other components in the system 100, to facilitate communication between the machines/components.

The client device 102 comprises a processor or processing circuitry (not shown in Figure 1). The processor controls various processing operations performed by the client device 102, such as communicating with other components in system 100. The processor may comprise processing logic to process data (e.g. data signals and data packets received from other components in system 100), and generate output data/signals/messages in response to the processing. The processor may comprise one or more of: a microprocessor, a microcontroller, and an integrated circuit.

The client device 102 comprises storage (not shown in Figure 1). The storage may comprise a volatile memory, such as random access memory (RAM), for use as temporary memory, and/or non-volatile memory such as Flash, read only memory (ROM), or electrically erasable programmable ROM (EEPROM), for storing data, programs, or instructions, for example.

The client device 102 comprises one or more interfaces (not shown in Figure 1) that enable the device to receive inputs and/or generate outputs (e.g. audio and/or visual outputs, or control commands, etc.) For example, the client device 102 may have a display screen to enable an app to be displayed on the client device and for a user to enter data into the app. The display screen may be used to display prompts or notifications generated by the system 100.

The client device 102 may comprise a battery 108 that is operable to be charged wirelessly.

The at least one sensor 110 of the system 100 comprises storage 114. The storage 114 may comprise a volatile memory, such as random access memory (RAM), for use as temporary memory, and/or non-volatile memory such as Flash, read only memory (ROM), or electrically erasable programmable ROM (EEPROM), for storing data, programs, or instructions, for example. The storage 114 may store a unique sensor identifier 116, which uniquely identifies that specific sensor 110. The sensor ID 116 may be, for example, an address, such as a media access control (MAC) address or some other numeric or alphanumeric identifier to distinguish the sensor 110 from other components in the system 100. The storage 114 may also store a rest identifier 117, which is used in broadcast messages when the specific sensor is in a default or rest state, i.e. when the sensor 110 has not detected a client device 102. Each sensor 110 is operable to transmit (e.g. broadcast) its unique sensor identifier 116 continuously or periodically until it receives instructions to do otherwise from the server 118. For example, as will be explained below, the server may provide the sensor 110 with a unique identifier from a set of unique identifiers to temporarily transmit/broadcast instead of the rest identifier 117. In this case, the sensor 110 may temporarily store the received unique identifier in storage 114 and transmit the received unique ID in place of the rest identifier 117 for a predefined time (e.g. 60 seconds) before reverting back to the default rest identifier 117. (The sensor 110 may always transmit its sensor ID 116 in a broadcast message in addition to either the rest ID 117 or the unique ID). At this time, the sensor 110 may remove the received unique identifier from storage 114.

The at least one sensor 110 may comprise a communication module 112. Alternatively a communication module 112 may be located externally to the sensor 110 itself, but the sensor 110 may be coupled to the communication module 112. For example, in some cases, two or more sensors 110 may share an externally-located communication module 112 for use to communicate with other components in the system 100. The or each sensor 110 may use communication module 112 to communicate with the server 118 via any one or more of: wireless communication, hypertext transfer protocol (HTTP), message queuing telemetry transport (MQTT), a wireless mobile telecommunication protocol, radio frequency communication (RFID), near field communication (NFC), ZigBee, Thread, Bluetooth, Bluetooth LE, IPv6 over Low Power Wireless Standard (6LoWPAN), Constrained Application Protocol (CoAP), wired communication. The or each sensor 110 may use communication module 112 to communicate with the client device via any one or more of: wireless communication, hypertext transfer protocol (HTTP), message queuing telemetry transport (MQTT), a wireless mobile telecommunication protocol, radio frequency communication (RFID), near field communication (NFC), ZigBee, Thread, Bluetooth, Bluetooth LE, IPv6 over Low Power Wireless Standard (6LoWPAN), Constrained Application Protocol (CoAP), wired communication.

The or each sensor 110 may be any one of: a wireless charging device (i.e. a device capable of wirelessly charging the battery of a client device 102), a temperature sensor, an infra-red sensor, a humidity sensor, a gas sensor (e.g. a CO₂ sensor), a pollution sensor, a pressure sensor, a light sensor, a magnetic field sensor, an environmental sensor, and a motion sensor. It will be understood that this is a non-limiting and non-exhaustive list of example sensor types. It will be understood that in any given environment, multiple sensors 110 may be installed and the sensors 110 may be the same or different. For example, in a meeting room in a shared workspace, there may a motion sensor which detects when someone has entered the meeting room and/or there may be a temperature sensor to detect changes in temperature that may indicate changes in occupancy in the room, and/or there may be a wireless charging device which senses someone is in the meeting room when they place their client device 102 on the sensor 110 to begin wireless charging.

The number of sensors 110 provided in a particular environment may depend on the size of the area and how the area is used. For example, one floor in/storey of a building may be considered one environment and therefore multiple sensors 110 may be provided in different locations on that storey in order to be more accurately determine where a client device 102 is located on that storey. In another example, in an airline lounge in an airport, a sensor 110 may be located near the entry/exit of the lounge to detect when customers are entering/leaving the area, and a sensor 110 of the wireless charging type may be provided next to each seat in the lounge. This may enable the precise location of each customer within the lounge to be determined by staff in the lounge, which may enable the staff to provide personalised service to each customer (e.g. addressing the customer by name without needing to ask their name, bringing the customer their favourite drink or food, etc.) Similarly, in a shop, sensors 110 may be located at least near the entrance/exit, which may enable a customer to be provided with personalised service by staff or via an app on the customer's client device 102 (e.g. telling them about relevant offers or new items that may be of interest, and where they are located in the shop). In a shared workspace, a sensor 110 may be provided at each desk to enable a user to reserve and 'check in' to a desk, which may also help their colleagues to know they are in the building and where they are located.

Depending on the type, the sensor 110 may comprise a power supply 126 operable to wirelessly charge the battery 108 of a client device 102. The wireless charging may begin as soon as the client device 102 is place on, next to or in close proximity to the sensor 110.

The server 118 may be a remote server or cloud server. Alternatively, the server 118 may be a physical server which is located in a particular environment which uses the services offered by system 100. The system 100 may comprise more than one server 118. The server 118 comprises storage 122. The storage 122 may comprise a volatile memory, such as random access memory (RAM), for use as temporary memory, and/or non-volatile memory such as Flash, read only memory (ROM), or electrically erasable programmable ROM (EEPROM), for storing data, programs, or instructions, for example. The storage 122 may store at least one set of unique identifiers 124. The or each set of unique identifiers 124 may comprise 15 to 20 unique identifiers. As explained in more detail below, a server 118 may select a unique identifier from the set of unique identifiers 124 in storage 122 and send the selected unique ID to a sensor 110 for transmission by the sensor. The server 118 may store an activation request whenever a unique ID is sent to a sensor 110 for transmission, as a record of which unique ID was selected from the set. The server 118 may also store an indication of which unique ID was last selected, so that the next time a selection is to be made a different unique ID is selected. In this way, the server 118 may cycle through the set of unique identifiers 124.

The order in which the server 118 cycles through the set of unique identifiers 124 may be vary depending on which sensor 110 the server 118 is providing the unique ID. For example, a building may be split into two zones A and B containing their own set of sensors 110. Depending on where a user and their client device 102 is located in the building, the client device 102 may be able to receive transmissions/broadcasts from sensors 110 in both zones A and B. To help determine a more precise location of the client device 102 in the building, the server 118 may be configured to cycle through the set of unique IDs 124 in one particular order for the sensors 110 in zone A and for to cycle through the set of unique IDs 124 in a different order for the sensors 110 in zone B. This may reduce the likelihood that two sensors 110 in the two zones A and B are transmitting the same unique ID at the same time, which may make it difficult to determine which zone the client device 102 is in and therefore, which services to provide/make available to the client device.

In some cases, system 100 may comprise one or more third party servers 128. The third party server 128 may be operated by a third party who accesses system 100 to provide services to their customers (via the customers' client devices 102). The third party server 128 may be a physical server located on the third party's premises, or may be a remote server. The client devices 102 may communicate directly with the third party server 128, which in turn communicates with the server 118. Alternatively, the client devices 102 may communicate directly with the server 118. Some third parties may prefer for communications to involve their third party servers 128 for security purposes, for example.

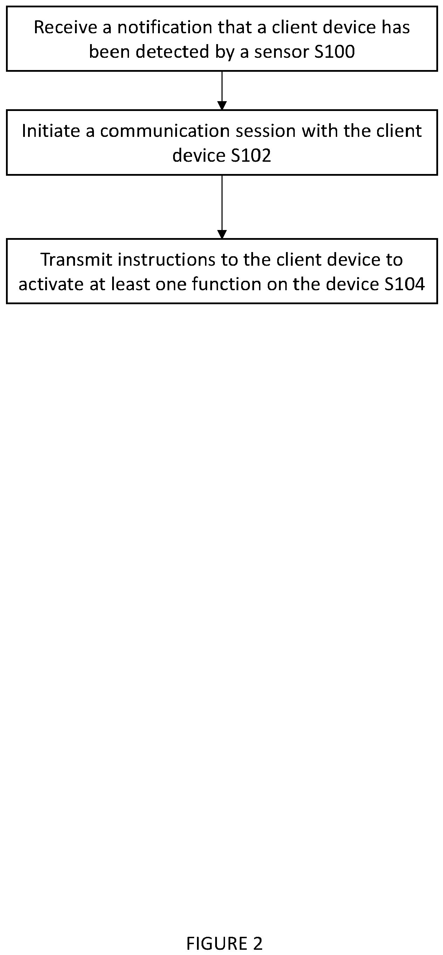

Operation of the system 100 is now described with reference to Figures 2 to 4.

Figure 2 shows a flowchart of example steps performed by a server 118 for activating functionality on a client device 102. The server 118 may receive, from a sensor 110, a notification that a client device 102 has been detected by the sensor 110 (step S100). The server may receive the notification directly from the client device or via a gateway or intermediate service such as a remote notification server (such as the Apple Push Notification service or Google Cloud Messaging). The server 118 may use this notification as a trigger to initiate a communication session with the client device 102 which has been detected (step S102), in order to be able to activate functionality on the client device/provide a service or information to a user of the client device. The server 118 may transmit, to the client device 102, instructions to activate a function on the client device 102 (step S104). The instructions that are sent may vary depending on where the client device 102 is determined to be, the type of sensor 110 which detected the client device, and the services/functionalities that a user of the client device 102 has subscribed to/authorised to receive.

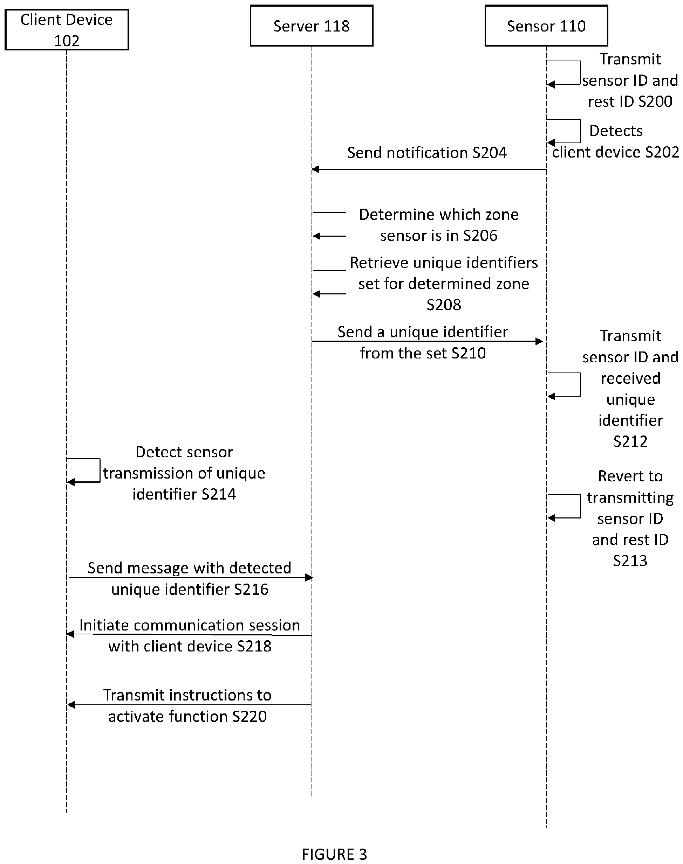

Figure 3 shows more detailed example steps performed by system 100 to activate functionality on a client device 102.

The or each sensor 110 in the system may be operable to continuously or periodically transmit (e.g. broadcast) a message or data packet which contains its unique sensor identifier (step S200). Thus, by default, each sensor 110 transmits a unique sensor identifier. At some point, the sensor 110 may sense/detect a client device 102 in proximity to the sensor (step S202). As mentioned above, the precise way in which the sensor 110 detects a client device may depend on the sensor type. In one example, the sensor 110 is a wireless charging device and the sensor 110 may detect the presence of a client device 102 when the client device 102 begins to wireless charge its battery 108 using the sensor's power supply 126. However the sensor 110 detects the client device 102, in response the sensor 110 sends a notification to the server 118 that a client device has been detected by the sensor 110 (step S204). As mentioned above, this causes the server 118 to initiate a communication session with the client device 102 which has been detected, in order to be able to activate functionality on the client device/provide a service or information to a user of the client device. The client device 102 and the sensor 110 may not be able to communicate with each other, i.e. may not be able to send and receive messages/data to and from each other. This may be for security and configuration reasons - it may not be desirable for the client device 102 to communicate directly with any sensor 110 to limit the possibility of malicious data being sent to the client device 102, and it may not be efficient to establish a trusted relationship between the client device 102 and every sensor 110 it may encounter. Thus, the sensor 110 transmits the notification to a server 118. A trusted relationship may exist between each sensor 102 and the server 118, and between the server 118 and each client device 102.

The notification sent by the sensor 110 to the server 118 at step S204 may comprise the sensor's unique ID 116 in order to enable the server 118 to identify which sensor 110 sent the notification. At step S206, the server may determine, after receiving the notification from the sensor 110, a zone of a plurality of zones in which the sensor is located. A zone may be defined as a whole building or area owned/operated by a third party, such as a shop, office or airport lounge, or a zone may be defined as a particular part of a building owned/operated by a third party, such as a section within a shop or a meeting room or set of desks within an office. How the zones are defined may depend on the third party's requirements. The server 118 determines which zone the sensor 110 which sent the notification is located in so that the server 118 can both determine where the client device 102 is located and so that the appropriate functionality (or functionalities) may be activated on the client device 102.

The server 118 may store (e.g. in storage 122) a database or look-up table which contains a record of each sensor 110 in the system 100, each sensor's unique sensor ID 116 and which zone the sensor 110 is located in. The server 118 may retrieve a set of unique identifiers 124 from storage 122 (step S208). The set of unique identifiers 124 may be associated with the determined zone. Alternatively, one set of unique identifiers 124 may be used for all zones or multiple zones.

The server 118 may select a unique identifier from the set of unique identifiers 124 and transmit the selected unique identifier to the sensor 110 which sent the notification for broadcasting (step S210). If another sensor in the same zone also contacts the server 118, a different unique identifier is selected and transmitted in response. The purpose of instructing the sensor 110 to switch to transmitting the selected unique identifier instead of the sensor ID is to cause the client device 102 to notice a change in its surroundings. Generally speaking, operating systems on the client devices may always be awake and listen for changes in the environment, but software applications on the client devices may not always be awake. To save resource, software applications may enter a sleep or rest mode when they are not in use. Some software applications running on the client device (e.g. smartphone) may register for certain notifications from the operating system in order to be brought out of a sleep/rest mode when a change has been detected. Accordingly, by making the sensor 110 temporarily switch what it transmits, the operating system may detect the change and notify at least one software application on the client device, and the software application may trigger the client device 102 to contact the server 118.

Thus, when the sensor receives the message from the server 118 with the selected unique identifier, the sensor 110 switches to transmitting (e.g. broadcasting) the selected unique identifier instead of its rest identifier (step S212). The message from the server 118 may specify a duration for the transmission, or the sensor 110 may be configured to transmit the received unique identifier for some predefined duration (e.g. 60 seconds). After this transmission duration has ended, the sensor 110 reverts back to transmitting its rest ID (step S213).

The client device 102 may detect the change in what the sensor 110 is broadcasting (step S214) and may be configured to, in response, transmit an activation response message comprising at least the sensor ID and the unique identifier temporarily broadcast by the sensor 110. The client device 102 may either transmit this activation response message to the server 118 directly, or may send it to the third party server 128. In the latter case, the third party server 128 may forward the activate response message to the server 118. The activation response message may contain additional information such as, for example, a device model, a device type, a battery level, and/or a signal strength indicating the strength of the signal received from the sensor 110.

Any change in the broadcast message of a sensor in the vicinity of the client device may trigger the client device to contact the server, which begins the process to activate functionality on either the client device, another device or server in the system, or multiple devices and servers in the system. One way to cause the client device to 'wake up' when it is in the vicinity of a sensor is for the sensor to change what message the sensor is broadcasting. For example, by default, the sensor might broadcast a message which only contains a sensor ID and, when required to, might temporarily switch to broadcasting a message containing a sensor ID and a unique ID (provided by the server). Alternatively, the sensor might broadcast a message which contains a sensor ID and a rest ID and, when required to, might temporarily switch to broadcasting a message containing a sensor ID and a unique ID. In either case, it is the temporary change in the broadcast message which causes the client device to take action and for the subsequent process to be triggered. Accordingly, it will be understood that the examples of broadcast messages described herein are non-limiting illustrative examples, and the broadcast messages may have any content or take any form, as long as when the client device has been detected by a sensor, the sensor temporarily changes its broadcast message content to trigger the client device to take action.

Once the server 118 receives the activation response message, the server 118 may, upon completing some other checks, initiate a communication session with the client device 102 (step S218) and then transmit instructions to the client device 102 to activate one or more functions (step S220).

The step S220 of transmitting instructions to activate a function on the client device 102 may comprise transmitting instructions to activate application software on the client device. For example, if the client device 102 is determined to be located in a reception area (a type of zone) in a hotel (a type of environment), the server 118 may instruct the client device 102 to launch an app associated with that hotel to enable a user of the client device 102 to check-in to the hotel. If the client device is determined to be located in a bedroom (another type of zone) in a hotel (a type of environment), the server 118 may instruct the client device 102 to launch an app associated with that hotel to enable a user of the client device 102 to see what facilities the hotel offers (e.g. swimming pool and opening times, restaurant and opening times, etc.) and/or to enable a user to control other devices within the room (e.g. app-controlled lighting or sound systems within the room). Depending on the type of functionality that is to be activated, the server may transmit instructions to another device or another server in the system, rather than to the client device itself or rather than directly to the client device. Thus, in some cases, the functionality may not be activated on the client device, but on or via a further device or server in the system.

The method performed by the server 118 may further comprise identifying an environment in which the sensor 110 which sent the notification at step S204 is located. This information may be stored in the server 118. For example, for each sensor 110, the server 118 may store a record as follows:

**Table 1**

| **Sensor ID** | **Zone** | **Environment** | **Associated Functionality** |
|---|---|---|---|
| 001 | A (reception) | Hotel X | Check-in Check-out (if already checked-in) |
| 002 | B (room) | Hotel X | Info about hotel Room service |
| 003 | A (entry) | Airline lounge Y | Provide welcome message |
| 004 | B (seat) | Airline lounge Y | Request food/drinks Provide flight information |

Thus, if the environment is known, the step S220 of transmitting instructions to activate a function on the client device 102 may comprise transmitting instructions to activate/launch application software associated with the identified environment on the client device 102. If the client device 102 does not have the required app, the step S220 of transmitting instructions to activate a function on the client device 102 may comprise transmitting instructions to prompt a user of the client device 102 to download and install application software associated with the identified environment. In some cases, the server may transmit instructions to a further device or a further server (e.g. a third party server) in the system, rather than to the client device itself or rather than directly to the client device. Thus, in some cases, the functionality may not be activated on the client device, but on or via a further device or server in the system. For example, a third party server can be informed that a client device 102 is in the identified environment, and the third party associated with the third party server can decide what to do with this information, e.g. to check-in or check-out the user of the client device 102.

The step S220 of transmitting instructions to activate a function on the client device 102 may comprise transmitting instructions to prompt a user of the client device 102 to activate Bluetooth functionality on the client device. This may occur if, for example, the sensor 110 which detected the client device 102 is a wireless charging device and the detection was made when the client device 102 started to draw power from the sensor. However, in order to trigger the client device 102 to communicate with the server 118, the client device needs to receive the transmissions made by sensor 110. The sensor 110 may in some cases use Bluetooth to transmit the sensor ID/unique identifier, and if a user of client device 102 has turned-off the Bluetooth functionality on the device, the server 118 may cause a notification to appear on the client device (e.g. on a display screen) to activate the Bluetooth functionality. This instruction may be sent if, after the sensor has transmitted the unique identifier, the server 118 has not received an activation response message from the client device 102, which may be indicative of Bluetooth not being turned on on the client device 102. Alternatively, the sensor 110 may itself be able to determine that the detected client device 102 has not turned on Bluetooth, because it is not able to see any transmissions from the client device 102. This information may be provided to the server when the notification is sent by the sensor 110 at step S204.

In cases where the sensor 110 which sent the notification at step S204 is a wireless charging device, the server 118 may transmit instructions to the sensor 110 to permit the client device 102 to receive wireless provision of power. Thus, when a client device 102 is place in close proximity to the wireless charging sensor 110, the client device 102 may automatically begin wireless charging. The server 118 may instruct the sensor 110 to continue permitting the wireless charging. However, if the client device 102 is not registered for the services provided by the system 100, the server 118 may instruct the sensor 110 to at least temporarily prevent the client device 102 from being wirelessly charged. The server 118 may transmit instructions to the client device to display a prompt to the user of the client device 102 to e.g. register for the service or download an app associated with the system 100 or service, in order to continue using the wireless charging facility provided by the sensor 110.

The instructions from the server 118 to the sensor 110 to permit the client device 102 to receive wireless provision of power may specify any one of: unlimited provision of power, provision of power for a predetermined time period, provision of power at a specific wattage (e.g. 5W instead of 7.5-10W, or a different power depending on a membership level of a user of the client device, such that premium members can receive a higher power), and provision of power until the client device has been charged to a predetermined level. In this way, the server 118 may be able to control the amount of power that the client device 102 receives. The server 118 may be able to access information on, or determine, the battery charge level of the client device 102 battery. For example, since the activation response message sent by the client device 102 to the server 118 at step S216 may contain information about the device model and current battery level, the server 118 may be able to determine or calculate how long it will take for the battery to be charged to a predetermined level and instruct the sensor 110 to prevent charging after this time has elapsed. This may also enable load-balancing - i.e. for client devices which require high current/power (such as electric cars), the activation response message may specify a low power so that electrical circuits are not tripped and load-balancing may be achieved. Alternatively, the current battery level may be periodically requested by the server 118 and provided by the client device 102.

As mentioned above, the step of determining a zone of a plurality of zones in which the sensor 110 (which sent the notification) is located may comprise: extracting, from the received notification, a sensor identifier 116 which uniquely identifies the sensor 110; and retrieving, from a database or look-up table (or similar) of sensors and associated zones and environments, the location of the sensor using the extracted sensor identifier. See Table 1 above for an example of the format/structure of the database/look-up table.

As mentioned earlier, the system 100 may comprise more than one sensor 110. Each zone of the plurality of zones may comprise at least two sensors that are each continuously broadcasting an identifier. In this case, more than one sensor 110 in a particular zone may separately send a notification to the server 118 that a client device 102 has been detected. The server may send a different unique identifier to each sensor 102 in the same zone which sends a notification to the server 118, so that the client device 102 will be able to detect two different broadcasts containing different identifiers. In this case, the activation response message received from the client device 102 (either directly by the server 118 or via the third party server 128) may comprise signal strength information indicating the strength of a signal received from each sensor. For example, the signal strength information may be a Received Signal Strength Indicator (RSSI). The RSSI may be an average value determined by the client device over a period of time (e.g. three seconds). The method performed by the server 118 may further comprise determining, using the received signal strength information, which sensor of the at least two sensors is closest to the client device 102. This information may be used to determine the location of the client device 102 more precisely.

For example, if there are three desks in a room and a sensor on each desk, and a client device is placed on each desk, then due to the size of the room, if one sensor A detects a client device and the procedure described herein is triggered, then all of the client devices may be close enough to sensor A to receive its broadcast messages. Each client device may then scan or listen for messages from other sensors in the area. Thus, each client device may detect messages from all three sensors in the room (regardless of whether the sensors are transmitting their rest IDs or a unique ID received from the server). The client device may determine which sensor of the three sensors is closest (typically the sensor from which it receives messages with the highest RSSI). If the sensor with the highest RSSI also has the same unique identifier that caused the client device to wake-up (i.e. sensor A), then the client device may send a vote to the server with the RSSI of the closest sensor. If multiple devices are closest to that sensor then each client device votes, and the server determines which client device 'wins' using the highest RSSI associated with each client device.

The method may further comprise determining, using further information, which sensor is closest to the client device 102. For example, a change in the client device Bluetooth signal as detected by a sensor 110 may be used to determine that the client device 102 has moved closer to or further away from the sensor 110, which may change which is the closest sensor to the client device 102. Additionally or alternatively, the further information may comprise one or more of: a time of day, a room booking, a reservation, a meeting entry in a calendar of a user of the client device. For example, if a room in an office or shared workspace has been booked between 10:00-11:00 and a first sensor detects a client device 102 in the room at 10:00 and a second sensor detects the same client device 102 in a nearby zone at 10:00, the server 118 may determine that the client device 102 is closer to the first sensor because a person is expected to be in that room at that time.

Once the closest sensor to the client device has been determined, the server 118 may temporarily associate the client device 102 with the sensor 110 determined to be closest to the client device. In this way, the location of the client device 102 is temporarily tied to the closest sensor 110, in order to provide the client device 102 with an appropriate service (i.e. to activate appropriate functionality).

As mentioned earlier, the server 118 may, in response to receiving a notification from a sensor 110 that a client device 102 has been detected, identify a third party associated with the identified environment in which the sensor is located, and may transmit, to the identified third party (e.g. to the relevant third party server 128), a message indicating that the client device is located in an environment associated with the third party. This may enable the third party to provide a user of the client device 102 with a personalised service. For example, in an airport lounge, the message may prompt the third party to identify the user associated with the client device (e.g. their name, their membership level), and identify any customer requirements associated with that user (e.g. their favourite drink, their preferred newspaper, their dietary preferences), so that staff in the airport lounge may provide the user with personalised service.

In some cases, it may be preferable, necessary or more efficient for the client device 102 and the sensor 110 to communicate directly in order for functionality to be activated on the client device. To facilitate this, the server 118 may perform, with the sensor 110, a security handshake; and if the security handshake is successful, may transmit, to the client device, a message indicating that the sensor has been authenticated. In this way, the server 118 and sensor 110 may perform establish or reconfirm a trusted relationship, and this may be used to enable the client device 102 and sensor 110 to communicate directly.

In cases where the sensor 110 is a wireless charging device, the server 118 may receive, from the sensor 110, a measure of power drawn by the client device 102; determine, using the received power, if the client device is a low-power consumption device; and if the client device is determined to be a low-power consumption device, permit the client device to receive wireless provision of power for an unlimited time. Alternatively, the server 118 may determine if a device model or device type in the received message from the client device 102, matches a device model or device type on a list of low-power consumption devices stored in the server 118. The list may be generated using information about various client devices, and/or may be generated using information from owners of client devices (e.g. businesses who provide employees with company phones or laptops), where the businesses may wish for their client devices to always receive power for an unlimited time. If the client device 102 is determined to be a low-power consumption device using either technique, the server 118 may permit the client device 102 to receive wireless provision of power for an unlimited time. For example, Bluetooth headphones may be a type of client device which is classified or recognised to have low power consumption (current/power draw). In this case, since the client device is known to draw, for example, less than 3W of power, the client device may be permitted to use the wireless charging ability of the sensor 110 for an unlimited time. However, if the device model or device type in the received message does not match a device model or device type on a list of low-power consumption devices, the instructions sent by the server 118 to the sensor 110 may comprise restricting a duration in which the client device receives wireless provision of power.

As mentioned above, the server 118 temporarily associates the client device 102 with a particular sensor 110. However, once the client device 102 has moved to a new location (e.g. because a user of the client device has left a meeting room or checked-out of a hotel), the server 118 needs to update the association. This could be done in several ways. For example, the sensor 110 which was closest to the client device 102 may send a notification to the server 118 that the client device can no longer be detected by the sensor. This may cause the server 118 to terminate the communication session with the client device 102 and prevent the client device 102 from accessing any further services and may cause any activated functionalities to be terminated. In another example, the server 118 may receive a new notification from a different sensor 110 about the same client device 102. In this case, the previous communication session may be terminated when a new communication session is established with the client device 102. In another example, a software application running on the client device 102 may request notifications from the operating system when the client device 102 no longer receives any broadcasts from a specific sensor or any sensor, and this may be used to determine the client device is no longer near the sensor. In another example, if the sensor is a wireless charging device, when power is no longer being drawn, the wireless charging device may determine that the client device is no longer in the vicinity of the sensor. Thus, the method performed by the server 118 may further comprise disassociating the client device from the associated sensor.

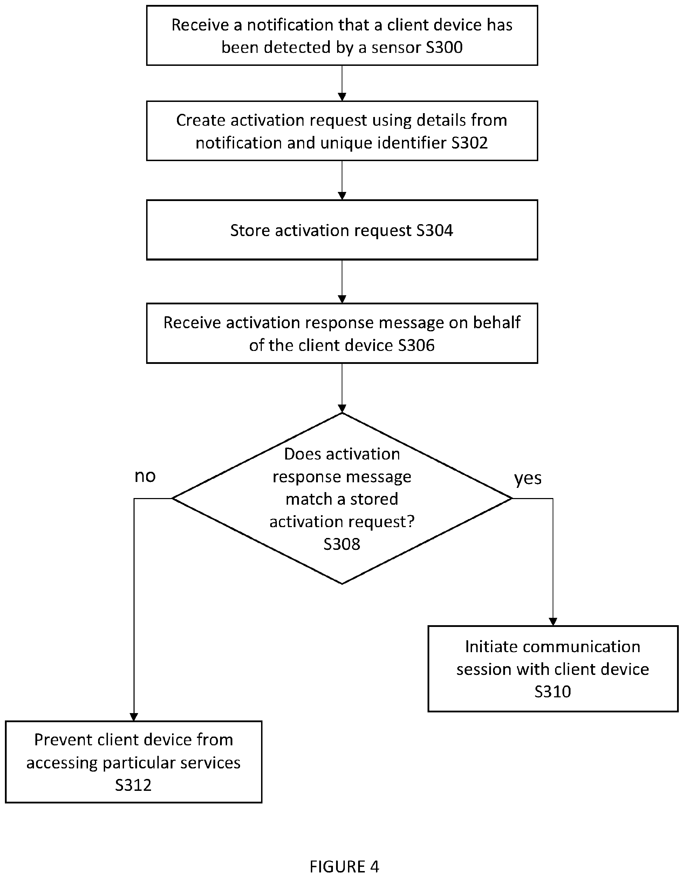

Figure 4 shows a flowchart of example steps performed by a server 118 to initiate a communication session with a client device 102. When a server 118 receives a notification that a client device has been detected by a sensor (step S300), the server 118 may send the unique identifier to the sensor 110 for transmission (step S210 of Figure 3) and may also generate an activation request (step S302). The activation request may comprise data identifying the sensor from which the notification was received (e.g. the sensor ID), data indicating a time and date when the notification was received from the sensor, and the unique identifier that was transmitted to the sensor. The server 118 may store the activation request (step S304), in order to match it to an activation response message received from a client device 102. When the server 118 receives an activation response message (step S306, either from a client device 102 directly or via a third party server 128), the server 118 determines whether the activation response message matches a stored activation request (step S308). The received activation response message comprises at least the sensor identifier and the unique identifier broadcast by the sensor, and this can be used to match the activation response message to a stored activation request. The server may wait for a period of time before taking action in response to the activation response message. For example, the server may wait for a period of time to allow for receipt of any further messages sent from other client devices in the vicinity of the sensor, so that the server may accurately match activation response messages to activation requests. The matching may use location information, such as signal strength information, to determine which client device is nearest to the sensor. The server 118 then initiates a communication session with the client device (to which the activation response message relates) if the activation response message matches the stored activation request (step S310). In this way, only client devices which send (directly or indirectly) an activation response message are able to receive the services offered by the system. This means that client devices which a sensor 110 may detect but which are not registered to the system will not be provided with any functionality or services (step S312).

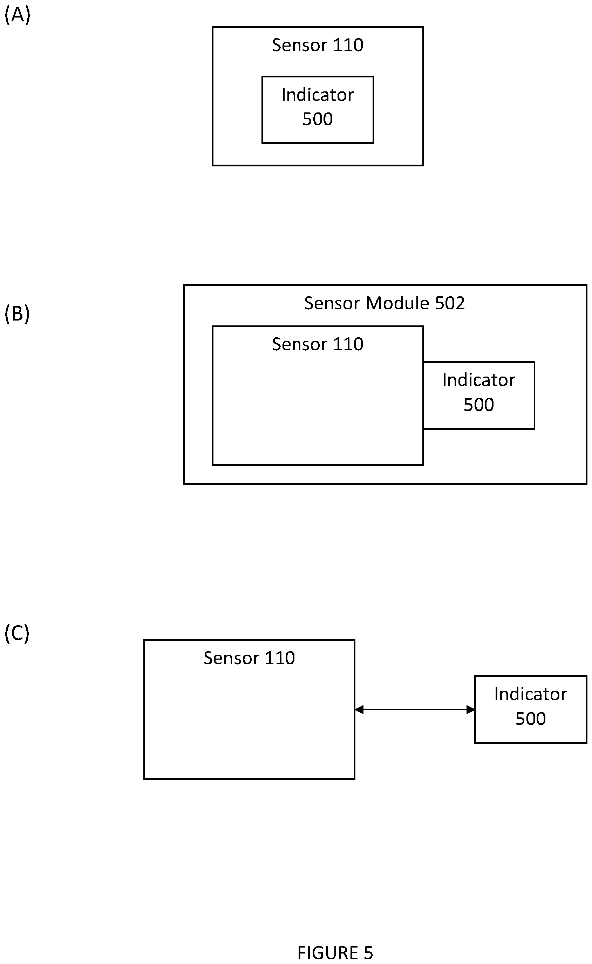

Figures 5A to 5C illustrate example techniques for indicating that a sensor 110 has detected a client device 102 and/or that functionality on a client device 102 has been activated. As mentioned above, in a shared workspace or in an office operating a "hot desking" policy, a sensor 110 may be provided at each desk to enable a user to 'check in' to a desk, which may also help their colleagues to know they are in the building and where they are located. It may be beneficial to show that a desk is occupied. Therefore, the sensor 110 may comprise or be coupled to an indicator which can indicate whether or not a desk is free/available or is already occupied, based on whether the sensor 110 has detected a client device 102.

As shown in Figures 5A to 5C, the sensor 110 may comprise or be coupled to an indicator 500. Preferably, the indicator 500 may be a visual indicator. However, the indicator 500 could be a visual indicator, a sound-based indicator, or a haptics-based indicator. In cases where the indicator 500 is a visual indicator, the indicator may comprise a display, a light or a plurality of lights. A display may be able to display a message indicating whether or not the desk is occupied or available, depending on whether or not the sensor 110 has detected a client device 102. The message may be personalised with respect to the user of the client device 102 that it has detected. For example, the display may display a message such as "Welcome Dan!" or "This desk is occupied by Dan". The personalisation may only be possible if information about the client device 102 or owner of the client device 102 is made available to the sensor 110 by either the client device 102 directly or via the server 118.

In cases where the indicator 500 is a visual indicator comprising one or more lights, the light(s) may simply turn on and off to indicate occupancy/availability of the desk, or may change colour to indicate the different states of the desk (available/occupied). For example, the light(s) may be green if the desk is available, and may be red if the desk is occupied.

As mentioned above, the or each sensor 110 may be any one of: a wireless charging device (i.e. a device capable of wirelessly charging the battery of a client device 102), a temperature sensor, an infra-red sensor, a humidity sensor, a gas sensor (e.g. a CO₂ sensor), a pollution sensor, a pressure sensor, a light sensor, a magnetic field sensor, an environmental sensor, and a motion sensor. The indicator 500 may be particularly useful in cases where the sensor 110 is a wireless charging device that is provided at each desk or seat in an office or other environment, as while a user uses the charging device to charge their client device 102 (e.g. their smartphone), the indicator 500 can indicate that the desk/seat/table is occupied. The indicator 500 may be integrated into the sensor 110, as shown in Figure 5A. In this case, when the sensor 110 detects a client device 102, it may automatically control the indicator 500 to indicate the desk is occupied. (Similarly, when the sensor 110 can no longer detect the client device 102, the sensor 110 may automatically control the indicator 500 to indicate the desk is available).

Alternatively, the sensor 110 and indicator 500 may be provided within a sensor module or sensor unit 502, and the sensor 100 and indicator 500 may be communicatively coupled (using any of the wired or wireless communication techniques described above) to each other within the sensor module 502, as shown in Figure 5B. In this case, when the sensor 110 detects a client device 102, the sensor 110 may send a control message/signal to the indicator 500 to instruct the indicator 500 to indicate that the desk is occupied. Similarly, when the sensor 110 can no longer detect the client device 102, the sensor 110 may send a control message/signal to the indicator 500 to instruct the indicator 500 to indicate that the desk is available. The sensor 110 and indicator 500 may be powered using the same power source, e.g. a power source used to power the sensor module 502.

In some cases, it may be useful for the indicator 500 to be more easily visible to other users. If the indicator 500 is integrated into the sensor 110 or sensor module 502, the indicator 500 may be in a particular location that is difficult to see from afar. It may be useful for a person who walks into a shared workspace to be able to quickly see which desks are available/occupied without having to walk to each desk. Thus, the indicator 500 may be provided remote from/at a distance from the sensor 110, as shown in Figure 5C. The sensor 100 and indicator 500 may be communicatively coupled to each other (using any of the wired or wireless communication techniques described above). The sensor 110 may be located on a surface of a desk, for example, while the indicator 500 may be provided at a height above the desk so that people can easily see at a distance if a desk is occupied or available. When the sensor 110 detects a client device 102, the sensor 110 may transmit a control message/signal to the indicator 500 to instruct the indicator 500 to indicate that the desk is occupied. Similarly, when the sensor 110 can no longer detect the client device 102, the sensor 110 may transmit a control message/signal to the indicator 500 to instruct the indicator 500 to indicate that the desk is available. In this case, due to the distance between the indicator 500 and sensor 110, the indicator 500 may be powered using a separate power source to that used to power the sensor 110, e.g. a dedicated battery or mains power supply.

Further embodiments of the present techniques are set out in the following numbered clauses:
1. A method for activating functionality on a client device, the method performed by a server comprising: receiving, from a sensor, a notification that the client device has been detected by the sensor; initiating a communication session with the client device; and transmitting, to the client device, instructions to activate a function on the client device.
2. The method according to clause 1 further comprising: determining, after receiving the notification from the sensor, a zone of a plurality of zones in which the sensor is located; retrieving a set of unique identifiers associated with the determined zone; transmitting a unique identifier from the set of unique identifiers to the sensor for broadcasting; and receiving an activation response message comprising at least the unique identifier broadcast by the sensor.
3. The method according to clause claim 2 further comprising: generating an activation request comprising: data identifying the sensor from which the notification was received, data indicating a time and date when the notification was received from the sensor, and the unique identifier that was transmitted to the sensor; and storing the activation request.
4. The method according to clause 3 further comprising: determining whether the activation response message matches a stored activation request; and initiating a communication session with the client device if the activation response message matches the stored activation request.
5. The method according to any preceding clause wherein transmitting instructions to activate a function on the client device comprises: transmitting instructions to activate application software on the client device.
6. The method according to any preceding clause further comprising: identifying an environment in which the sensor is located.
7. The method according to clause 6 wherein transmitting instructions to activate a function on the client device comprises: transmitting instructions to activate application software associated with the identified environment on the client device.
8. The method according to clause 6 wherein transmitting instructions to activate a function on the client device comprises: transmitting instructions to prompt a user of the client device to download and install application software associated with the identified environment.
9. The method according to any preceding clause wherein transmitting instructions to activate a function on the client device comprises: transmitting instructions to prompt a user of the client device to activate Bluetooth functionality on the client device.
10. The method according to any preceding clause wherein the sensor is a wireless charging device, and the method further comprises: transmitting instructions to the sensor to permit the client device to receive wireless provision of power.
11. The method according to clause 10 wherein the instructions to the sensor to permit the client device to receive wireless provision of power specify any one of: unlimited provision of power, provision of power for a predetermined time period, provision of power at a specific wattage, and provision of power until the client device has been charged to a predetermined level.
12. The method according to any one of clauses 2 to 11 wherein determining a zone of a plurality of zones in which the sensor is located comprises: extracting, from the received notification, a sensor identifier which uniquely identifies the sensor; and retrieving, from a database of sensors and associated zones and environments, the location of the sensor using the extracted sensor identifier.
13. The method according to any one of clauses 2 to 12 wherein: each zone of the plurality of zones comprises at least two sensors that are each continuously broadcasting an identifier.
14. The method according to clause 13 wherein the message received from the client device comprises signal strength information indicating the strength of a signal received from each sensor, and the method further comprises: determining, using the received signal strength information, which sensor is closest to the client device.
15. The method according to clause 13 or 14 further comprising: determining, using further information, which sensor is closest to the client device.
16. The method according to clause 15 wherein the further information comprises one or more of: a time of day, a room booking, a reservation, a meeting entry in a calendar of a user of the client device.
17. The method according to clause 13, 14 or 15 further comprising: associating the client device with the sensor determined to be closest to the client device.
18. The method according to any one of clauses 6 to 17 further comprising: identifying a third party associated with the identified environment in which the sensor is located; and transmitting, to the identified third party, a message indicating that the client device is located in an environment associated with the third party.
19. The method according to preceding clause further comprising: performing, with the sensor, a security handshake; and if the security handshake is successful, transmitting, to the client device, a message indicating that the sensor has been authenticated.
20. The method according to any one of clauses 2 to 19 wherein the message received from the client device further comprises one or both: a device model, a device type, and a value indicating a remaining power of a battery of the client device.
21. The method according to clause 20 when dependent on clause 10 further comprising: receiving, from the sensor, a measure of power drawn by the client device; determining, using the received power, if the client device is a low-power consumption device; and permitting the client device to receive wireless provision of power for an unlimited time.
22. The method according to clause 20 when dependent on clause 10 further comprising: determining, if a device model or device type in the received message from the client device matches a device model or device type on a list of low-power consumption devices; and permitting the client device to receive wireless provision of power for an unlimited time.
23. The method according to clause 22 wherein if the device model or device type in the received message does not match a device model or device type on a list of low-power consumption devices, the instructions to the sensor to permit the client device to receive wireless provision of power comprise restricting a duration in which the client device receives wireless provision of power.
24. The method according to any preceding clause further comprising: receiving, from the sensor, a notification that the client device cannot be detected by the sensor; and terminating the communication session with the client device.
25. The method according to clause 24, when dependent on clause 17, further comprising: disassociating the client device from the associated sensor.
26. A server for activating functionality on a client device and carrying out the method of any of clauses 1 to 25, the server comprising: a processor coupled to memory and a communication module, to: receive a notification that the client device has been detected by a sensor; initiate a communication session with the client device; and transmit, to the client device, instructions to activate a function on the client device.
27. The server according to clause 26 wherein the communication module communicates with one or more sensors via any one or more of: wireless communication, hypertext transfer protocol (HTTP), message queuing telemetry transport (MQTT), a wireless mobile telecommunication protocol, radio frequency communication (RFID), near field communication (NFC), ZigBee, Thread, Bluetooth, Bluetooth LE, IPv6 over Low Power Wireless Standard (6LoWPAN), Constrained Application Protocol (CoAP), wired communication.
28. The server according to clause 26 or 27 wherein the communication module communicates with the client device via any one or more of: wired communication, wireless communication, a wireless mobile telecommunication protocol, hypertext transfer protocol (HTTP), message queuing telemetry transport (MQTT), ZigBee, Thread, Bluetooth, Bluetooth LE, IPv6 over Low Power Wireless Standard (6LoWPAN), or Constrained Application Protocol (CoAP).
29. A method for activating functionality on a client device, the method performed by a sensor comprising: detecting a client device in the vicinity of the sensor; transmitting, to a server, a notification that the client device has been detected by the sensor; receiving, from the server, a unique identifier from a set of unique identifiers for broadcasting; and broadcasting the received unique identifier instead of broadcasting a default sensor identifier.
30. The method according to clause 29 wherein the sensor is a wireless charging device, and the method further comprises: receiving, from the server, instructions to permit the sensor to enable wireless provision of power to the client device.
31. The method according to clause 29 or 30 further comprising: broadcasting, after a predetermined time, the default sensor identifier instead of the received unique identifier.
32. The method according to clause 29, 30 or 31 further comprising: transmitting, to the server, a notification that the client device can no longer be detected by the sensor.
   32A. The method according to any of clauses 29 to 32 further comprising: controlling an indicator to indicate when a client device has been detected in the vicinity of the sensor.
   32B. The method according to any of clauses 29 to 3A further comprising: controlling an indicator to indicate when no client device has been detected in the vicinity of the sensor.
33. A sensor for activating functionality on a client device and carrying out the method of any of clauses 29 to 32, the sensor comprising: a processor coupled to memory and a communication module, to: detect a client device in the vicinity of the sensor; transmit, to a server, a notification that the client device has been detected by the sensor; receive, from the server, a unique identifier from a set of unique identifiers for broadcasting; and broadcast the received unique identifier instead of broadcasting a default sensor identifier.
34. A sensor according to clause 33 wherein the communication module is part of the sensor or is external to the sensor.
35. The sensor according to clause 33 or 34 wherein the communication module communicates with the server via any one or more of: wireless communication, hypertext transfer protocol (HTTP), message queuing telemetry transport (MQTT), a wireless mobile telecommunication protocol, ZigBee, Thread, Bluetooth, Bluetooth LE, IPv6 over Low Power Wireless Standard (6LoWPAN), Long Range Wide Area Network (LoRaWAN), Low-power Wide-area network (LPWAN), Sigfox, Constrained Application Protocol (CoAP), and wired communication.
36. The sensor according to clause 33, 34 or 35 wherein the communication module communicates with the client device via any one or more of: wireless communication, hypertext transfer protocol (HTTP), message queuing telemetry transport (MQTT), a wireless mobile telecommunication protocol, radio frequency communication (RFID), near field communication (NFC), ZigBee, Thread, Bluetooth, Bluetooth LE, IPv6 over Low Power Wireless Standard (6LoWPAN), Constrained Application Protocol (CoAP), wired communication.
37. The sensor according to any one of clauses 33 to 36 wherein the sensor is any one of: a wireless charging device, a temperature sensor, an infra-red sensor, a humidity sensor, a gas sensor (e.g. a CO₂ sensor), a pollution sensor, a pressure sensor, a light sensor, a magnetic field sensor, an environmental sensor, and a motion sensor.
   37A. The sensor according to any one of clauses 33 to 37 further comprising an indicator for indicating when a client device has been detected in the vicinity of the sensor.
   37B. The sensor according to any one of clauses 33 to 37 wherein the processor: transmits a control signal to an indicator communicatively coupled to the sensor, the control signal instructing the indicator to indicate that a client device has been detected.
   37C. The sensor according to clauses 37A or 37B wherein the indicator is any one of: a visual indicator, a light, a plurality of lights, a display, an audio indicator, and a haptics indicator.
38. A method for activating functionality on a client device, the method performed by a client device comprising: receiving, from at least one sensor in the vicinity of the client device, a sensor identifier and a rest identifier in a broadcast message; receiving, from the at least one sensor, the sensor identifier and a unique identifier in a further broadcast message; transmitting, responsive to receiving the unique identifier, a message comprising at least the sensor identifier and the unique identifier broadcast by the at least one sensor; and receiving, from a server, instructions to activate a function.
39. The method according to clause 38 wherein receiving instructions to activate a function comprises: receiving instructions to activate application softwa re.
40. The method according to clause 38 wherein receiving instructions to activate a function comprises: receiving instructions to prompt a user of the client device to download and install application software.
41. The method according to clause 38, 39 or 40 wherein receiving instructions to activate a function comprises: receiving instructions to prompt a user of the client device to activate Bluetooth functionality on the client device.
42. The method according to any one of clauses 38 to 41 wherein transmitting a message comprising at least the sensor identifier and the unique identifier comprises: transmitting a message comprising the sensor identifier and the unique identifier broadcast by the at least one sensor and signal strength information indicating the strength of the broadcast received from the at least one sensor.
43. A client device for carrying out the method of any of clauses 38 to 42, the client device comprising: a processor coupled to memory and a communication module, to: receive, from at least one sensor in the vicinity of the client device, a sensor identifier and a rest identifier in a broadcast message; receive, from the at least one sensor, the sensor identifier and a unique identifier in a further broadcast message; transmit, responsive to receiving the unique identifier, a message comprising at least the sensor identifier and the unique identifier broadcast by the at least one sensor; and receive, from a server, instructions to activate a function.
44. The client device according to clause 43 wherein the client device is any one of: a smartphone, a mobile computing device, a laptop, a mobile or portable electronic device, an electric vehicle, an electronic device comprising a battery operable to be charged via a wired connection, and an electronic device comprising a battery operable to be charged wirelessly.
45. A non-transitory data carrier carrying code which, when implemented on a processor, causes the processor to carry out the method of any of clauses 1 to 25, 29 to 32 and 38 to 42.
46. A system for activating functionality on a client device, the system comprising: a client device having at least one function that is activatable when the client device is in a particular environment; a sensor to detect a client device in the vicinity of the sensor; and a server to: receive, from the sensor, a notification that the client device has been detected by the sensor; initiate a communication session with the client device; and transmit, to the client device, instructions to activate the at least one function on the client device.
47. A method for detecting a first device and activating functionality on a second device, the method performed by a server comprising: receiving, from a sensor, a notification that a first device has been detected by the sensor; initiating a communication session with the second device; and transmitting, to the second device, instructions to activate a function on the second device.
48. A system for detecting a first device and activating functionality on a second device, the system comprising: a first device; a second device; a sensor to detect when the first device is in the vicinity of the sensor; and a server to: receive, from the sensor, a notification that the first device has been detected by the sensor; initiate a communication session with the second device; and transmit, to the second device, instructions to activate at least one function on the second device.
49. The system according to clause 48 wherein the first device is a client device.
50. The system according to clause 48 or 49 wherein the second device is any one of: a server, a third party server, a further device in the system, or a user device.
51. The system according to clause 48, 49 or 50 wherein the server transmits instructions to activate a service on the second device.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

## Claims

1. A method for activating functionality on a client device, the method performed by a server comprising:
receiving, from a sensor, a notification that the client device has been detected by the sensor;
initiating a communication session with the client device; and
transmitting, to the client device, instructions to activate a function on the client device.

2. The method as claimed in claim 1 further comprising:
determining, after receiving the notification from the sensor, a zone of a plurality of zones in which the sensor is located;
retrieving a set of unique identifiers associated with the determined zone;
transmitting a unique identifier from the set of unique identifiers to the sensor for broadcasting; and
receiving an activation response message comprising at least the unique identifier broadcast by the sensor.

3. The method as claimed in claim 2 further comprising:
generating an activation request comprising:
data identifying the sensor from which the notification was received,
data indicating a time and date when the notification was received from the sensor, and
the unique identifier that was transmitted to the sensor; and storing the activation request.

4. The method as claimed in claim 3 further comprising:
determining whether the activation response message matches a stored activation request; and
initiating a communication session with the client device if the activation response message matches the stored activation request.

5. The method as claimed in any preceding claim wherein transmitting instructions to activate a function on the client device comprises:
transmitting instructions to activate application software on the client device.

6. The method as claimed in any preceding claim further comprising:
identifying an environment in which the sensor is located.

7. The method as claimed in claim 6 wherein transmitting instructions to activate a function on the client device comprises:
transmitting instructions to activate application software associated with the identified environment on the client device; or
transmitting instructions to prompt a user of the client device to download and install application software associated with the identified environment.

8. The method as claimed in any preceding claim wherein the sensor is a wireless charging device, and the method further comprises:
transmitting instructions to the sensor to permit the client device to receive wireless provision of power.

9. The method as claimed in claim 9 wherein the instructions to the sensor to permit the client device to receive wireless provision of power specify any one of: unlimited provision of power, provision of power for a predetermined time period, provision of power at a specific wattage, and provision of power until the client device has been charged to a predetermined level.

10. The method as claimed in any one of claims 2 to 9 wherein determining a zone of a plurality of zones in which the sensor is located comprises:
extracting, from the received notification, a sensor identifier which uniquely identifies the sensor; and
retrieving, from a database of sensors and associated zones and environments, the location of the sensor using the extracted sensor identifier.

11. The method as claimed in any one of claims 2 to 10 wherein:
each zone of the plurality of zones comprises at least two sensors that are each continuously broadcasting an identifier, and
the message received from the client device comprises signal strength information indicating the strength of a signal received from each sensor, and
wherein the method further comprises:
determining, using the received signal strength information, which sensor is closest to the client device; and
associating the client device with the sensor determined to be closest to the client device.

12. A sensor for activating functionality on a client device, the sensor comprising:
a processor coupled to memory and a communication module, to:
detect a client device in the vicinity of the sensor;
transmit, to a server, a notification that the client device has been detected by the sensor;
receive, from the server, a unique identifier from a set of unique identifiers for broadcasting; and
broadcast the received unique identifier instead of broadcasting a default sensor identifier.

13. The sensor as claimed in claim 12 wherein the sensor is any one of: a wireless charging device, a temperature sensor, an infra-red sensor, a humidity sensor, a gas sensor, a pollution sensor, a pressure sensor, a light sensor, a magnetic field sensor, an environmental sensor, and a motion sensor.

14. The sensor according to claim 12 or 13 further comprising an indicator for indicating when a client device has been detected in the vicinity of the sensor.

15. The sensor as claimed in claim 12 or 13 wherein the processor:
transmits a control signal to an indicator communicatively coupled to the sensor, the control signal instructing the indicator to indicate that a client device has been detected.
